Europäisches Patentamt

European Patent Office

Office européen des brevets

(19)

(11) Numéro de publication: **0 163 556 B1**

(12) **FASCICULE DE BREVET EUROPEEN**

(45) Date de publication du fascicule du brevet:
18.10.89

(51) Int. Cl.⁴: **G 01 N 29/04**

(21) Numéro de dépôt: **85400674.9**

(22) Date de dépôt: **04.04.85**

(54) Procédé et installation de détection sélective de défauts dans une pièce à contrôler.

(30) Priorité: **06.04.84 FR 8405490**

(43) Date de publication de la demande:
**04.12.85 Bulletin 85/49**

(45) Mention de la délivrance du brevet:
**18.10.89 Bulletin 89/42**

(84) Etats contractants désignés:
**AT BE CH DE GB IT LI LU NL SE**

(56) Documents cités:
**EP-A- 0 051 089**
**DE-A- 2 239 735**
**US-A- 3 346 807**

**PATENTS ABSTRACTS OF JAPAN, vol 8, no. 211 (P-303)
[1648], 26 septembre 1984; JP - A - 59 94063**

(73) Titulaire: **VALLOUREC Société Anonyme dite., 7, place du Chancelier Adenauer, F-75116 Paris (FR)**

(72) Inventeur: **Joet, François, F-21140 Genay (FR)**

(74) Mandataire: **Rinuy, Santarelli, 14, avenue de la Grande Armée, F-75017 Paris (FR)**

ACTORUM AG

## Description

L'invention concerne un procédé et une installation de détection sélective (de préférence automatique) de défauts microscopiques dans une pièce à contrôler présentant au moins une discontinuité macroscopique de nature connue (métallurgique ou géométrique notamment).

L'invention s'applique tout particulièrement, mais non exclusivement, au contrôle non destructif (par ultrasons ou par courants de FOUCAULT notamment) de tubes métalliques soudés.

Ainsi qu'on le sait, les tubes soudés sont des feuillards conformés en tubes de section appropriée (généralement circulaire) puis soudés le long de bords longitudinaux aboutés en sorte de présenter un cordon de soudure sensiblement longitudinal (rectiligne ou hélicoïdal). Ces feuillards peuvent être de natures et de nuances très diverses (notamment aciers, ferritiques ou austénitiques, ou métaux spéciaux) et résulter de techniques d'élaboration diverses (coulée continue ou en lingots principalement). Or, suivant son mode d'élaboration et sa nuance, un feuillard contient en plus ou moins grande quantité des inclusions endogènes (silicates, aluminates, carbonitrures de titane par exemple) qui réagissent aux techniques de contrôle non destructif, notamment aux faisceaux ultrasonores, comme des défauts internes. Il en résulte qu'un tube soudé peut être éliminé, à tort, bien qu'il réponde en pratique aux spécifications imposées et qu'il soit tout à fait apte à donner satisfaction en service. En effet, pour être agréés, même pour des utilisations de pointe exigeant un haut niveau de qualité (domaine nucléaire par exemple), les tubes soudés doivent satisfaire à des spécifications sévères concernant principalement (voire uniquement) leurs cordons de soudure. Or, actuellement, à moins de procéder manuellement (et sous réserve de pouvoir repérer à l'œil le cordon de soudure, ce qui n'est pas toujours le cas) on est incapable de distinguer les défauts en fonction de leur emplacement par rapport au cordon de soudure et aux zones affectées thermiquement qui le longent, et on rejette indifféremment les tubes soudés dont le cordon de soudure est défectueux et les tubes soudés de façon irréprochable mais dont le feuillard de base présente des défauts intrinsèques. Il en résulte un taux de rebut artificiellement excessif, non représentatif des déficiences réelles des tubes considérés, et dont les conséquences peuvent être considérables.

La présente invention vise à supprimer cet inconvénient en permettant une détection sélective, à bon escient, des défauts que présentent les cordons de soudure (et les zones affectées thermiquement correspondantes) de tubes soudés (de préférence circulaires mais pas nécessairement) et ce, selon des modalités aisément automatisables.

Ce problème technique est différent de celui que vise à résoudre le document DE-A 2 239 735 (KRAUTKRÄMER) qui concerne le contrôle non destructif de pièces comportant un cordon de soudure formant un bourrelet et qui vise à éliminer les échos parasites dûs à ce bourrelet. Il est utilisé à cet effet une sonde de distance déplacée parallèlement à la pièce, et la reconnaissance d'une surépaisseur par cette sonde est utilisée pour éliminer l'écho associé relevé par un capteur à ultrasons. Lorsque seul le cordon de soudure est à vérifier, il est recommandé de déplacer le capteur à ultrasons au voisinage seulement de celui-ci.

L'invention se place dans le cadre très général de pièces, tubulaires ou non, présentant au moins une discontinuité macroscopique de nature connue (cordon de soudure, cannelure, ...) dont on veut tester séparément des zones prédéterminées définies par leur position par rapport à cette discontinuité. Dans le cadre des tubes soudés, l'invention peut s'appliquer en effet, a contrario, au contrôle du feuillard de base, en dehors du cordon de soudure et des zones affectées thermiquement associées.

L'invention selon la revendication propose à cet effet un procédé de détection de défauts microscopiques dans une pièce métallique sondée à contrôler présentant au moins une discontinuité macroscopique métallurgique constituée par un cordon de soudure.

L'invention s'applique tout particulièrement au contrôle de tubes, notamment des tubes soudés et, la ligne choisie pour effectuer ce contrôle étant classiquement une ligne hélicoïdale, à spires très serrées, en sorte de couvrir tout le volume du tube, elle préconise que l'inspection porte sélectivement sur un secteur angulaire englobant principalement le cordon de soudure et les zones affectées thermiquement qui le longent. L'invention préconise en outre, mais de façon non exclusive, que la discontinuité macroscopique et les défauts microscopiques soient détectés par analyse des échos reçus en réponse à des impulsions ultrasonores. Pour ce qui est des défauts, deux cas sont possibles: soit on analyse de façon intermittente les échos reçus en réponse à une série continue d'impulsions, soit on émet des impulsions en trains discontinus. Lorsqu'on procède, pour la discontinuité comme pour les défauts, par émission d'impulsions ultrasonores, ces impulsions sont avantageusement synchronisées, avec une fréquence qui est de préférence asservie à la vitesse avec laquelle la ligne de contrôle est parcourue; de façon plus précise, dans le cas d'une ligne de contrôle hélicoïdale, cette fréquence est avantageusement reliée, de façon linéaire, à la composante angulaire de cette vitesse.

Pour la mise en œuvre de ce procédé, l'invention selon la revendication 8 propose une installation de détection sélective de défauts microscopiques dans une pièce métallique soudée à contrôler présentant au moins une discontinuité macroscopique métallurgique constituée par un cordon de soudure.

Le capteur de défauts et le détecteur de discontinuité sont avantageusement des transducteurs à ultrasons (par exemple de même type) de préférence synchronisés par un générateur d'impulsions de synchronisation asservi à la vitesse relative entre le capteur (et le détecteur) et la pièce à contrôler. Dans le cas de tubes soudés, le détecteur sera choisi avec des caractéristiques telles qu'il puisse détecter le cordon de soudure: il s'agira de préférence d'un transducteur à ultrasons orienté selon une direction voisine de l'axe, tandis que le capteur de défauts sera de préférence un transducteur à ultrasons orienté dans un plan transversal. Dans le cas de tubes entraînés en translation au travers d'un rotor (portant le capteur et le détecteur) entraîné en rotation, les impulsions de ce capteur et de ce détecteur sont avantageusement synchronisées en fonction de la vitesse de rotation de ce rotor, au moyen par exemple d'une roue crantée et d'un détecteur de proximité, ou d'un codeur optique. Le circuit de commande du capteur de défauts commande de façon intermittente, soit les impulsions ultrasonores, soit le traitement des échos résultant. Dans ce dernier cas, le circuit de commande assure avantageusement un aiguillage des échos selon des voies différentes de traitement correspondant aux diverses zones d'inspection définies sur la pièce à contrôler. Le nombre des capteurs ou des détecteurs n'est pas limité à un.

Dans un mode de réalisation préféré, l'installation selon l'invention est une installation classique de contrôle aménagée en sorte de pouvoir assurer, au choix, une inspection complète du volume de la pièce, comme cela se fait actuellement, soit une inspection sélective selon le procédé de l'invention.

D'autres objets, caractéristiques et avantages de l'invention ressortent de la description qui suit, donnée à titre d'exemple non limitatif, en regard des dessins annexés sur lesquels:

La figure 1 est une vue schématique simplifiée d'une installation selon l'invention;
La figure 2 est un diagramme montrant l'évolution au cours du temps des principaux signaux qui y apparaissent;
La figure 3 est une vue en perspective simplifiée d'une installation selon l'invention selon une autre forme de réalisation; et
La figure 4 en est une vue schématique simplifiée.

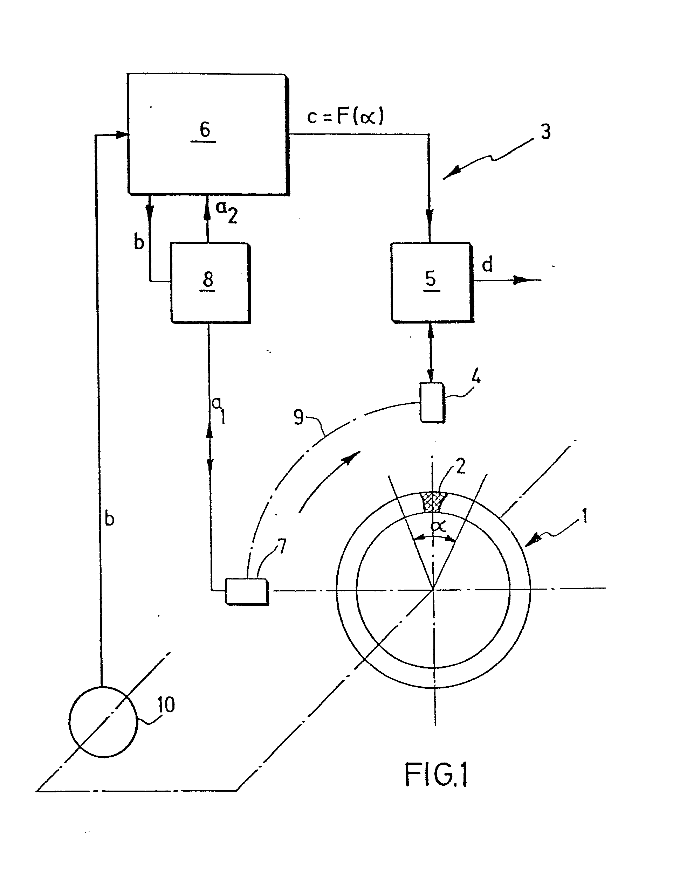

La figure 1 montre à titre d'exemple et de façon schématique une version simplifiée d'une installation selon l'invention adaptée au contrôle de tubes soudés 1, présentant un cordon de soudure 2, par exemple rectiligne longitudinal. L'installation de détection sélective 3 associée est automatique et comprend principalement un capteur de défauts 4 auquel est associé un circuit de commande et de traitement 5 lui-même disposé en regard du tube 1 et placé sous le contrôle d'un dispositif de déclenchement et de temporisation 6. Un détecteur 7, sensible à la discontinuité que constitue le cordon de soudure 2, est en outre disposé en regard du tube 1; il lui est associé un circuit de commande et de traitement 8 connecté au dispositif précité de déclenchement et de temporisation 6. Le capteur de défauts 4 et le détecteur 7 sont en pratique montés sur un même support mobile 9 schématisé par une ligne en traits mixtes.

Dans l'exemple considéré, le capteur 4 et le détecteur 7 sont tous deux des transducteurs à ultrasons. Compte tenu des tâches qui leur sont assignées, le détecteur est avantageusement orienté dans un plan axial tandis que le capteur est orienté de préférence dans un plan transversal. Ces transducteurs font généralement un angle de quelques 20° par rapport à la surface du tube. Compte tenu de sa disposition, le capteur 4 est adapté à détecter principalement des défauts disposés axialement (sens long): c'est en pratique ce type de défauts qu'il convient tout particulièrement de détecter. En variante, un capteur complémentaire lui est associé pour détecter des défauts disposés transversalement (sens travers). Selon une autre variante de réalisation non représentée, le détecteur 7 et le capteur 4 sont des sondes ponctuelles à courants de FOUCAULT.

Des problèmes mécaniques et d'éventuels problèmes d'interférence ultrasonore font que le détecteur 7 et le capteur 4 sont de préférence disposés en sorte que les faisceaux d'ultrasons qu'ils émettent interceptent le tube dans des plans transversaux différents.

Le dispositif de déclenchement et de temporisation 6 commande pour le capteur 4 et le détecteur 7 des impulsions ultrasonores synchronisées selon une fréquence qui varie avantageusement avec la vitesse relative entre ces transducteurs 4 et 7 et le tube 1, de préférence avec la composante angulaire de cette dernière. Cette vitesse est détectée par un détecteur de vitesse 10 adapté à générer des impulsions de synchronisation, notées b, dont la fréquence varie selon une loi de préférence linéaire avec la vitesse relative entre transducteurs et tube. Ces impulsions b sont transmises au dispositif 6; elles sont à la base du déclenchement d'activité du capteur 4. Pour obtenir un contrôle fiable, il convient que la fréquence des impulsions b soit du même ordre de grandeur que la fréquence de récurrence des dispositifs ultrasonores considérés (c'est-à-dire que le nombre d'excitations reçues en une seconde par les transducteurs à ultrasons 4 et 7). De façon classique, cette fréquence est de 10 K Hz environ. Le cas échéant, on applique les impulsions b à un multiplicateur de fréquence en sorte d'obtenir une fréquence finale adéquate.

Le détecteur de vitesse 10 est, dans le cas de la figure 1, où le tube est entraîné en translation le long de son axe tandis que les transducteurs sont entraînés en rotation, un détecteur de proximité disposé en regard d'une roue dentée solidaire en rotation des transducteurs. A titre d'exemple, on assure aux transducteurs une vitesse de 6.000 tours/minute et on ménage 100 créneaux sur la roue dentée: on obtient ainsi la fréquence de 10 K Hz désirée.

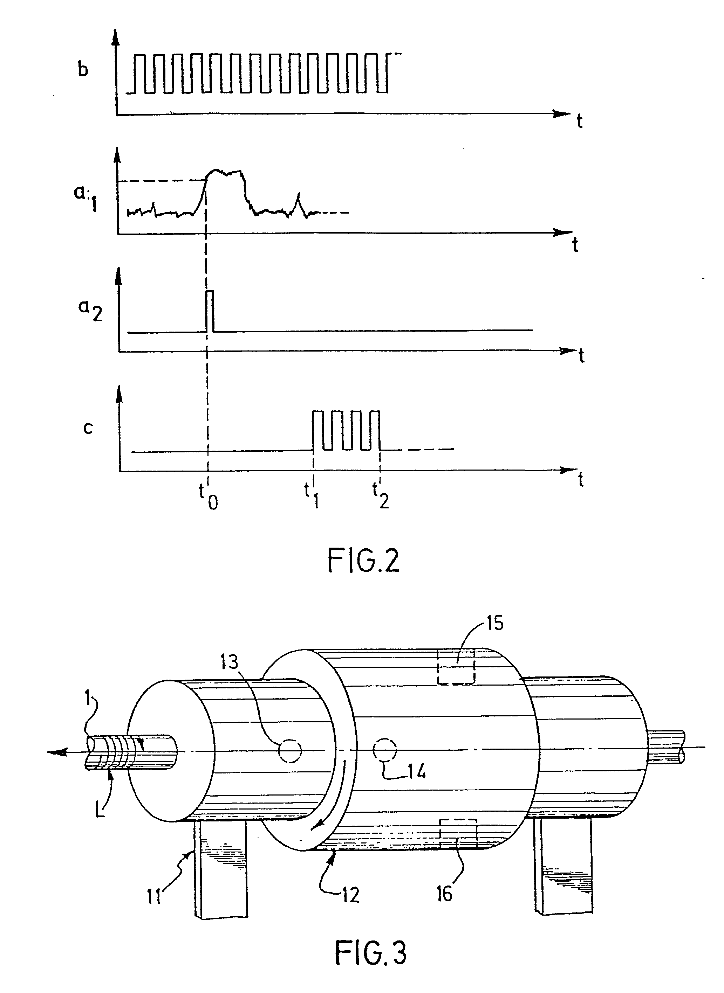

En fonctionnement, l'installation de la figure 1 est parcourue par des signaux dont l'évolution au cours du temps est illustrée à la figure 2. Les impulsions b sont prises en compte par le dispositif 6 et le circuit 8 pour l'excitation du détecteur 7. Celui-ci reçoit en écho un signal a1 dont le niveau de bruit de fond augmente au passage de la discontinuité métallurgique constituée par le cordon de soudure 2 jusqu'à dépasser, à un instant $t_0$, un niveau de référence.

Le circuit 8 transmet alors au dispositif 6 un signal a2 de déclenchement. Après réception de ce signal, le dispositif 6 déclenche, après un nombre prédéterminé d'impulsions b correspondant à un intervalle $(t_1-t_0)$ donné, le circuit 5 pendant un second nombre prédéterminé d'impulsions b correspondant à un intervalle de temps $(t_2-t_1)$ donné (signal c): le capteur 4 inspecte alors le tube sur un secteur angulaire d'amplitude $\alpha$, défini en sorte de ne couvrir que le cordon de soudure 2 et les zones affectées thermiquement qui le bordent. Cette amplitude est en pratique définie par étalonnage avec une tube présentant des défauts-étalons. A titre d'exemple, pour un tube de 50 mm de diamètre, l'amplitude $\alpha$ est d'environ 30°. On obtient ainsi, sur la sortie d du circuit 5, un signal de mesure ne prenant en compte que les éventuels défauts cités dans ou près du cordon de soudure. En variante, le capteur 4 est excité en permanence et le circuit 5 «aiguille» le signal de mesure vers l'un ou l'autre des deux circuits de traitement correspondant au secteur angulaire $\alpha$, ou à son complément.

La précision avec laquelle le secteur angulaire est défini dépend bien sûr du nombre d'impulsions b qui sont émises par un tour de la roue crantée.

En variante, lorsque la rotation est appliquée non pas aux transducteurs 4 et 7 mais au tube, les impulsions b sont générées par un codeur optique.

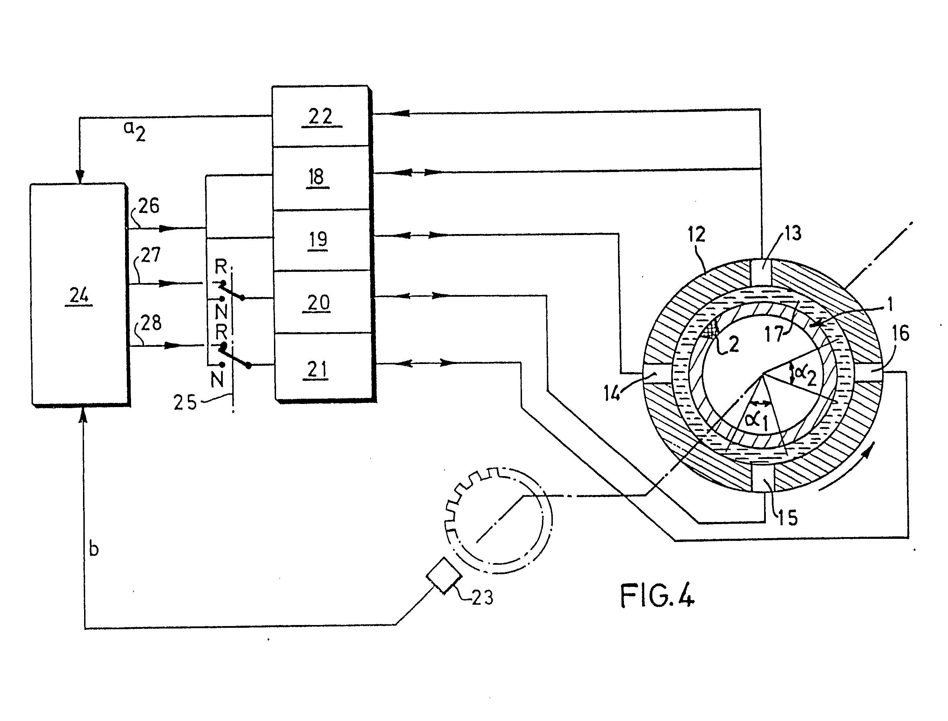

Les figures 3 et 4 illustrent une installation adaptée à assurer, au choix, un contrôle total ou sélectif d'un tube 1 destiné à être contrôlé selon une ligne (L) hélicoïdale (fictive).

La figure 3 montre un tube 1 coulissant axialement par rapport à un stator 11 sur lequel est monté en rotation un rotor 12 portant deux paires de transducteurs ultrasonores 13 et 14 et 15 et 16, disposées dans des plans différents et adaptées à détecter sous plusieurs angles, respectivement des défauts orientés dans le sens travers, et dans le sens long. Un film d'eau 17 est bien sûr maintenu en permanence entre ces transducteurs et le tube 1. Cette configuration est classique et est couramment utilisée pour le contrôle conventionnel des tubes.

A chacun des transducteurs 13 à 16 est associé un circuit de commande et de traitement 18, 19, 20 et 21, respectivement. Au transducteur 13 est en outre associé un second circuit de commande et de traitement 22.

Ainsi qu'il ressort de la figure 4, un détecteur de vitesse 23 et un dispositif de déclenchement et de temporisation 24, analogues aux éléments 10 et 6 de la figure 1, sont associés aux circuits 18 à 22 selon deux modes possibles de connection sélectionnés au moyen d'un inverseur 25 relié aux entrées des circuits 20 et 21 associés aux capteurs 15 et 16.

En mode normal (N), le dispositif 24 assure, en fonction des impulsions b du détecteur de vitesse 23, une excitation synchronisée des circuits 18 à 21 par sa sortie 26: les quatre transducteurs 13 à 16 détectent tous les défauts du tube 1 et émettent, selon des voies non représentées, des signaux de mesure correspondants. Le circuit 24 n'assure dans ce cas qu'un rôle de synchronisation.

En reprise (R), le tube 1 subissant un nouveau cycle de contrôle, le transducteur 13 est utilisé en outre en détecteur de discontinuité, comme le détecteur 7 de la figure 1, le circuit associé 22 traitant alors les échos reçus par le transducteur 13 en sorte de transmettre au dispositif 24 un signal de déclenchement lorsque le cordon de soudure est détecté. Ce dispositif 24 assure alors, par ses sorties 27 et 28, des déclenchements intermittents des transducteurs 15 et 16 pendant des intervalles de temps égaux mais décalés, définis par des nombres prédéterminés d'impulsions émises par le détecteur de vitesse 23, en sorte de leur faire explorer successivement sur le tube des secteurs angulaires $\alpha_1$ et $\alpha_2$ identiques correspondant à une même zone du tube.

Il est à noter que le schéma de la figure 4 a été simplifié afin d'en faciliter la lisibilité; ainsi aucune des voies de sortie des circuits 18 à 21 n'a été représentée. En outre, les transducteurs ont été regroupés par fonctions alors qu'ils sont diamétralement opposés par paires à la figure 3.

En fait les circuits de commande et de traitement des transducteurs (5, 8 et 18 à 21) sont des circuits classiques aisément adaptables en fonction de l'invention et ne nécessitent aucune instruction spéfique pour permettre à un homme de métier de les mettre en œuvre. De même, les dispositifs de synchronisation, de déclenchement et de temporisation, peuvent sans difficulté être réalisés compte tenu des indications données ci-dessus quant à leur rôle et objet.

Il va de soi que la description qui précède n'a été proposée qu'à titre indicatif et que de nombreuses variantes peuvent être proposées par l'homme de l'art sans sortir du cadre de l'invention.

L'invention est particulièrement bien adaptée au contrôle de tubes soudés circulaires à paroi mince (ayant par exemple un diamètre de 19 mm et une épaisseur de 1,8 mm), mais peut se généraliser à d'autres types de pièces; il convient, le cas échéant, de prévoir une correction des signaux de sortie des capteurs et des détecteurs en fonction d'éventuelles variations dans leur orientation et leur distance vis-à-vis de la surface extérieure de la pièce à contrôler. Il est à noter que dans le cas du contrôle d'un cordon de soudure, le détecteur doit être sensible à la différence de structure associée; la mise en œuvre de l'invention est d'autant plus délicate que cette variation de structure induite par l'opération de soudure a été plus atténuée par un éventuel traitement thermomécanique ultérieur.

Il est à noter que, lorsque le(s) capteur(s) et le(s) détecteur(s) sont entraînés en rotation autour d'un tube, leur liaison électrique avec les circuits associés comporte des contacts tournants qui peuvent être, de manière connue, notamment, des liaisons par capacités tournantes ou à selfs tournantes, ou encore des balais balayant des pistes.

Dans une version simplifiée de l'invention, la base de temps que constituent les détecteurs de vitesse 10 ou 23 peut être, en variante, indépendante du mouvement relatif entre capteurs (et détecteurs) et pièce, et délivrer des impulsions de synchronisation à une fréquence constante imposée.

On appréciera que le capteur de défauts est disposé et orienté en sorte de détecter les défauts mais pas la discontinuité macroscopique.

## Revendications

1. Procédé de détection de défauts microscopiques dans une pièce métallique soudée à contrôler présentant au moins une discontinuité macroscopique métallurgique constituée par un cordon de soudure, par déplacement relatif de moyens de détection de la discontinuité et de moyens de contrôle des défauts vis-à-vis de cette pièce suivant une ligne de contrôle donnée, caractérisé en ce que, les moyens de détection et les moyens de contrôle étant solidaires les uns des autres, les moyens de détection étant sensibles à la différence de structure associée au cordon et les moyens de contrôle étant principalement sensibles à des défauts, on relève les instants $(t_0)$ auxquels cette ligne de contrôle (L) rencontre la discontinuité (2) et on recherche d'éventuels défauts dans la pièce de façon intermittente, pendant seulement des intervalles de temps donnés $(\alpha; \alpha_1, \alpha_2)$ définis par référence auxdits instants, réalisant ainsi une détection sélective de défauts.

2. Procédé selon la revendication 1, caractérisé en ce que, la pièce à contrôler étant un tube métallique soudé (1), comportant un cordon de soudure (2) longé par deux zones affectées thermiquement et la ligne de contrôle (L) étant une ligne hélicoïdale, on relève les instants auxquels cette ligne hélicoïdale rencontre le cordon de soudure et on recherche d'éventuels défauts pendant des intervalles de temps définis par référence à ces instants en sorte d'assurer une exploration d'un secteur angulaire $(\alpha; \alpha_1, \alpha_2)$ sensiblement centré sur ledit cordon.

3. Procédé selon la revendication 1 ou la revendication 2, caractérisé en ce qu'on relève les instants $(t_0)$ auxquels la ligne de contrôle rencontre la discontinuité par analyse de l'évolution avec le temps des échos $(a_1)$ reçus en réponse à un train continu d'impulsions ultrasonores.

4. Procédé selon l'une quelconque des revendications 1 à 3, caractérisé en ce qu'on recherche les éventuels défauts par analyse des échos reçus en réponse à des trains discontinus d'impulsions ultrasonores.

5. Procédé selon l'une quelconque des revendications 1 à 3, caractérisé en ce qu'on recherche les éventuels défauts par analyse intermittente des échos reçus en réponse à un train continu d'impulsions ultrasonores.

6. Procédé selon l'une quelconque des revendications 3 à 5, caractérisé en ce que, pour rechercher d'éventuels défauts, on analyse des échos reçus en réponse à des trains d'impulsions synchronisées avec les impulsions dudit train continu d'impulsions émis pour relever les instants auxquels la ligne de contrôle rencontre la discontinuité.

7. Procédé selon la revendications 6, caractérisé en ce que, la pièce à contrôler étant un tube et la ligne de contrôle étant hélicoïdale, on asservit la fréquence des impulsions synchronisées à la vitesse angulaire avec laquelle on décrit cette ligne de contrôle.

8. Installation de détection sélective de défauts microscopiques dans une pièce métallique soudée à contrôler présentant au moins une discontinuité macroscopique métallurgique constituée par un cordon de soudure, comportant un détecteur (7; 13) sensible à cette discontinuité monté en mouvement relatif vis-à-vis de cette pièce suivant une ligne de contrôle donnée, et au moins un capteur de défaut mobile par rapport à cette pièce, caractérisé en ce qu'au capteur de défauts (4; 15, 16), est associé un ensemble de commande intermittente (5, 6; 20, 21, 24), le détecteur (7; 13) sensible à cette discontinuité (2) solidaire du capteur de défauts, étant adapté à transmettre, lorsqu'il détecte cette discontinuité, un signal de déclenchement (a2) à l'ensemble de commande intermittente dudit capteur de défauts, cet ensemble étant adapté, à un décalage de temps près, à déclencher le capteur en réponse à ce signal pour un intervalle de temps $(\alpha; \alpha_1, \alpha_2)$ prédéterminé.

9. Installation selon la revendication 8, caractérisé en ce que le capteur de défauts (4; 15, 16) et le détecteur sensible à la discontinuité (7; 13) sont des transducteurs ultrasonores qui sont synchronisés par un dispositif de déclenchement et de temporisation (6; 24).

10. Installation selon la revendication 9, caractérisée en ce que ledit dispositif synchronise ces transducteurs à partir d'impulsions de synchronisation (b) émises par un détecteur (10; 23) sensible à la vitesse relative d'un support (9; 12) de ces transducteurs vis-à-vis de la pièce (1) à contrôler.

11. Installation selon la revendication 10, destinée au contrôle de tubes, caractérisée en ce que, le support (9; 12) décrivent un mouvement hélicoïdal vis-à-vis d'un tube (1), le détecteur (10; 23) est sensible à la composante angulaire de la vitesse relative.

12. Installation selon l'une quelconque des revendications 9 à 11, destinée au contrôle de tubes, caractérisée en ce que le capteur de défauts (4; 15, 16) est orienté dans un plan transversal au tube et que le détecteur sensible à la discontinuité (7; 13) est orienté dans un plan axial.

13. Installation selon l'une quelconque des revendications 8 à 12, caractérisée en ce que le capteur de défauts (4; 15, 16) est excité, par intermittences, par l'ensemble de commande.

14. Installation selon l'une quelconque des revendications 8 à 12, caractérisée en ce que l'ensemble de commande transmet le signal de retour du capteur de défauts, par intermittences, vers l'une ou l'autre de deux voies de traitement.

15. Installation selon l'une quelconque des revendications 8 à 14, adaptée à assurer un contrôle de la totalité du volume d'un tube soudé et comportant une première paire de deux transducteurs ultrasonores orientés dans un même plan transversal et une seconde paire de deux transducteurs ultrasonores orientée dans des plans axiaux, caractérisée en ce que les transducteurs (15, 16) de la première paire sont connectés à un même ensemble de commande intermittente (24) adapté à les déclencher successivement en sorte de leur faire explorer un même secteur angulaire du tube, qu'un des transducteurs (13) de la seconde paire est en outre connecté en détecteur de discontinuité, et qu'un interrupteur (25) connecte les transducteurs (15, 16) de la première paire à l'ensemble de commande (24) soit à une sortie de synchronisation (26) pour un contrôle total du tube, soit à des sorties de commande intermittente (27, 28) pour un contrôle sélectif du tube.

## Claims

1. A method for detecting microscopic defects in a welded metallic workpiece to be checked comprising at least one macroscopic metallurgical discontinuity constituted by a weld seam, be movement of means for detection of the discontinuity and means for sensing defects relative to said workpiece along a predetermined check line, characterized in that the detection means and the sensing means are fixed to one another, the detection means being adapted to detect the difference in structure associated with the weld seam and the sensing means being principally adapted to detect defects, the times $(t_0)$ at which the check line (L) meets the discontinuity (2) are observed and the workpiece is scanned for any defects in an intermittent manner only during predetermined time intervals $(\alpha; \alpha_1, \alpha_2)$ defined in relation to said times $(t_0)$ thus providing a selective detection of defects.

2. A method according to claim 1, characterized in that the workpiece to be checked is a welded metallic tube (1) comprising a weld seam (2) bordered by two thermally affected zones and the check line (L) is a helical line, and in that the times at which this helical line meets the weld seam are detected and the workpiece is scanned for any defects during time intervals defined in relation to these times so that an angular sector $(\alpha; \alpha_1, \alpha_2)$, substantially centred on the said weld seam, is examined.

3. A method according to claim 1 or claim 2, characterized in that the time $(t_0)$ at which the check line meets the discontinuity are determined by analysis of the change with time of the echoes $(a_1)$ received in response to a continuous transmission of ultrasonic waves.

4. A method according to any one of claims 1 to 3, characterized in that the examination for possible defects is performed by analysis of the echoes received in response to a discontinuous transmission of ultrasonic waves.

5. A method according to any one of claims 1 to 3, characterized in that the examination for possible defects is performed by intermittent analysis of reflected signals received in response to a continuous transmission of ultrasonic waves.

6. A method according to any one of claims 3 to 5, characterized in that to detect possible defects, an analysis is made of reflected signals received in response to a continuous transmission of ultrasonic waves which are synchronized with the said continuous waves transmitted to determine the times at which the check line meets the discontinuity.

7. A method according to claim 6, characterized in that, the workpiece to be checked being a tube and the check line being a helical line, the synchronized waves are transmitted at a frequency depending on the angular speed of the check line.

8. A system for selectively detecting microscopic defects in a welded metallic workpiece to be checked comprising at least one macroscopic metallurgical discontinuity constituted by a weld seam, comprising a detector (7; 13) adapted to detect this discontinuity, mounted to move relative to the workpiece along a predetermined check line, and at least one defect sensor which is movable relative to the workpiece, characterized in that an intermittent control unit (5, 6; 20, 21, 24) is connected to the defect sensor (4; 15, 16), the detector (7; 13) adapted to detect the discontinuity (2) is fixed to the defect sensor and is adapted to transmit, when it detects the discontinuity, a triggering signal $(a_2)$ to the intermittent control unit of said defect sensor, this unit being adapted to trigger the defect sensor for a predetermined time interval $(\alpha; \alpha_1, \alpha_2)$, after a short delay, in response to this signal.

9. A system according to claim 8, characterized in that the defect sensor (4; 15, 16) and the detector (7; 13) adapted to detect the discontinuity are ultrasonic transducers which are synchronized by a triggering and delay device (6; 24).

10. A system according to claim 9, characterized in that the said device synchronizes the transducers by means of synchronization pulses (b) transmitted by a detector (10; 23) responsive to the relative speed of a support (9; 12) of these transducers relative to the workpiece (1) to be checked.

11. A system according to claim 10, adapted for checking tubes, characterized in that the support (9, 12) moves in a helical path relative to a tube (1) and the detector (10, 23) is responsive to the angular component of the relative speed.

12. A system according to any one of claims 9 to 11, adapted for checking tubes, characterized in that the defect sensor (4, 15, 16) is orientated in a plane which is transverse to the tube and the detector (7, 13) adapted to detect the discontinuity is orientated in an axial plane.

13. A system according to any one of claims 8 to 12, characterized in that the defect sensor (4, 15, 16) is activated intermittently by the control unit.

14. A system according to any one of claims 8 to 12, characterized in that the control unit transmits the return signal from the defect sensor intermittently to one or other of two processing channels.

15. A system according to any one of claims 8 to 14, adapted for checking the entire surface of a welded tube and comprising a first pair of ultrasonic transducers orientated in the same transverse plane and a second pair of ultrasonic transducers orientated in axial planes, characterized in that the first pair of transducers (15, 16) are connected to a common intermittent control unit (24) adapted to trigger them successively so that they scan one and the same angular sector of the tube, in that one of the transducers (13) of the second pair is also connected as a discontinuity detector, and in that a switch (25) connects the first pair of transducers (15, 16) to the control unit (24), either to a synchronization terminal (26) for total inspection of the tube, or to intermittent control terminals (27, 28) for selective inspection of the tube.

## Patentansprüche

1. Verfahren zur Feststellung mikroskopisch kleiner Fehler in geschweissten metallischen Prüfstücken, die mindestens eine makroskopische metallurgische Diskontinuität in Form einer Schweissnaht aufweisen, durch Relativbewegung von Mitteln zur Detektion der Diskontinuität und von Fehlerprüfmitteln in bezug auf dieses Stück entlang einer gegebenen Prüflinie, dadurch gekennzeichnet, dass man, indem die Mittel zur Detektion und die Prüfmittel fest miteinander verbunden sind, die Mittel zur Detektion für die der Naht zugeordneten Strukturunterschiede empfindlich sind, und die Prüfmittel im wesentlichen empfindlich für Fehler sind, jene Zeitpunkte $(t_0)$ feststellt, in denen die Prüflinie (L) mit der Diskontinuität (2) zusammentrifft, und dass man eventuelle intermittierende Fehler im Prüfstück nur während gegebener Zeitintervalle $(\alpha; \alpha_1, \alpha_2)$ ermittelt, die durch Vergleich mit den genannten Zeitpunkten definiert werden, wodurch eine selektive Feststellung von Fehlern verwirklicht wird.

2. Verfahren nach Anspruch 1, dadurch gekennzeichnet, dass wenn das Prüfstück ein geschweisstes Metallrohr (1) mit einer Schweissnaht (2) ist, die durch zwei thermisch übergreifende Zonen erstreckt ist und wobei die Prüflinie (L) eine schraubenförmige Linie ist, man die Zeitpunkte feststellt, in denen diese schraubenförmige Linie mit der Schweissnaht zusammentrifft, und dass man eventuelle Fehler während der durch Bezug auf diese Zeitpunkte definierten Zeitintervalle ermittelt, um eine Untersuchung eines winkelförmigen Bereichs $(\alpha;, \alpha_1, \alpha_2)$ zu gewährleisten, der deutlich auf diese Naht zentriert ist.

3. Verfahren nach Anspruch 1 oder 2, dadurch gekennzeichnet, dass man die Zeitpunkte $(t_0)$, in denen die Prüflinie mit der Diskontinuität zusammentrifft, durch Analyse der zeitlichen Entwicklung der in Antwort auf eine kontinuierliche Folge von Ultraschallimpulsen empfangenen Echos $(a_1)$ feststellt.

4. Verfahren nach einem der Ansprüche 1 bis 3, dadurch gekennzeichnet, dass man eventuelle Fehler durch Analyse der in Antwort auf eine kontinuierliche Folge von Ultraschallimpulsen empfangenen Echos ermittelt.

5. Verfahren nach einem der Ansprüche 1 bis 3, dadurch gekennzeichnet, dass man eventuelle Fehler durch intermittierende Analyse der in Antwort auf eine kontinuierliche Folge von Ultraschallimpulsen empfangenen Echos ermittelt.

6. Vefahren nach einem der Ansprüche 3 bis 5, dadurch gekennzeichnet, dass man zur Ermittlung eventueller Fehler Echos analysiert, die in Antwort auf Impulsfolgen erhalten wurden, die mit den Impulsen der genannten kontinuierlichen Folge von Impulsen, welche ausgesandt worden sind, um die Zeitpunkte zu bestimmen, zu denen die Prüflinie mit der Diskontinuität zusammentrifft, synchronisiert sind.

7. Verfahren nach Anspruch 6, dadurch gekennzeichnet, dass man, wenn das Prüfstück ein Rohr ist und die Prüflinie schraubenförmig verläuft, die Frequenz der synchronen Impulse nach der Winkelgeschwindigkeit regelt, mit der man diese Prüflinie beschreibt.

8. Vorrichtung zur selektiven Feststellung von mikroskopisch kleinen Fehlern in einem geschweissten metallischen Prüfstück, das mindestens eine makroskopische metallurgische Diskontinuität in Form einer Schweissnaht aufweist, mit einem für diese Diskontinuität empfindlichen Detektor (7; 13), der relativ zu dem Prüfstück entlang einer gegebenen Prüflinie beweglich angeordnet ist, und mit mindestens einem in bezug auf das Prüfstück beweglichen Fehlerfühler, dadurch gekennzeichnet, dass mit dem Fehlerfühler (4; 15, 16) eine Einheit (5, 6; 20, 21, 24) zur intermittierenden Steuerung verbunden ist, wobei der mit dem Fehlerfühler fest verbundene und für die Diskontinuität (2) empfindliche Detektor (7; 13) so eingerichtet ist, dass er bei Feststellung dieser Diskontinuität ein Auslösesignal (a2) an die Einheit zur intermittierenden Steuerung des Fehlerfühlers aussendet, wobei die Einheit so eingerichtet ist, dass sie mit einer geringen Zeitverschiebung den Fühler in Antwort auf dieses Signal für ein vorbestimmtes Zeitintervall $(\alpha; \alpha_1, \alpha_2)$ auslöst.

9. Vorrichtung nach Anspruch 8, dadurch gekennzeichnet, dass der Fehlerfühler (4; 15, 16) und der für die Diskontinuität empfindliche Detektor (7; 13) Ultraschallwandler sind, die durch eine Auslöse- und Verzögerungsvorrichtung (6; 24) synchronisiert werden.

10. Vorrichtung nach Anspruch 9, dadurch gekennzeichnet, dass die genannte Vorrichtung diese Wandler ausgehend von Synchronisationsimpulsen (b) synchronisiert, die von einem Detektor (10; 23) ausgesendet werden, der für die Relativgeschwindigkeit eines Trägers (9; 12) dieser Wandler in bezug auf das Prüfstück (1) empfindlich ist.

11. Vorrichtung nach Anspruch 10 zum Prüfen von Rohren, dadurch gekennzeichnet, dass, wenn der Träger (9, 12) eine schraubenförmige Bewegung gegenüber einem Rohr (1) ausführt, der Detektor (10, 23) empfindlich für die Winkelkomponente der Relativgeschwindigkeit ist.

12. Vorrichtung nach einem der Ansprüche 9 bis 11 zum Prüfen von Rohren, dadurch gekennzeichnet, dass der Fehlerfühler (4, 15, 16) in einer quer zum Rohr verlaufenden Ebene ausgerichtet ist, und dass der für die Diskontinuität empfindliche Detektor (7, 13) in einer axialen Ebene ausgerichtet ist.

13. Vorrichtung nach einem der Ansprüche 8 bis 12, dadurch gekennzeichnet, dass der Fehlerfühler (4, 15, 16) durch Unterbrechungen durch die Steuereinheit erregt wird.

14. Vorrichtung nach einem der Ansprüche 8 bis 12, dadurch gekennzeichnet, dass die Steuereinheit das Rückmeldesignal des Fehlerfühlers durch Unterbrechungen zu dem einem oder dem anderen der beiden Verarbeitungswege überträgt.

15. Vorrichtung nach einem der Ansprüche 8 bis 14, die zur Gewährleistung einer Prüfung des Gesamtvolumens eines geschweissten Rohres adaptiert ist und ein erstes Paar von zwei Ultraschallwandlern aufweist, die in der gleichen querliegenden Ebene ausgerichtet sind, und ein zweites Paar von zwei Ultraschallwandlern, die in axialen Ebenen ausgerichtet sind, dadurch gekennzeichnet, dass die Wandler (15, 16) des ersten Paares mit der gleichen Einheit zur intermittierenden Steuerung (24) verbunden sind, die so adaptiert ist, dass sie sie aufeinanderfolgend auslöst, um sie einen gleichen winkelförmigen Bereich des Rohres untersuchen zu lassen, dass ausserdem einer der Wandler (13) des zweiten Paares mit dem Diskontinuitätsdetektor verbunden ist, und dass ein Unterbrecher (25) die Wandler (15, 16) des ersten Paares mit der Steuereinheit (24) verbindet, und zwar entweder an einem Synchronisationsausgang (26) für eine komplette Prüfung des Rohres, oder an den Ausgängen der intermittierenden Steuerung (27, 28) für eine selektive Prüfung des Rohres.

$c = F(\alpha)$

FIG.1

FIG.2

FIG.3

FIG.4